# EUROPEAN PATENT APPLICATION

(11) **EP 4 757 432 A1**
(43) Date of publication of application: **10.06.2026**
(21) Application number: 24858529.1
(22) Date of filing: 26.08.2024
(51) Int. Cl.: H04W 52/02

(54) **COMMUNICATION METHOD, DEVICE AND COMMUNICATION SYSTEM**

(30) Priority: 30.08.2023 CN 202311112196
(71) Applicant: HUAWEI TECHNOLOGIES CO., LTD., Shenzhen 518129 (CN)
(72) Inventor: XIA, Panbin, Shenzhen, Guangdong 518129 (CN); FAN, Chaoyu, Shenzhen, Guangdong 518129 (CN)
(74) Representative: Pfenning, Meinig & Partner mbB
(86) International application number: PCT/CN2024/114595
(87) International publication number: WO 2025/044993

(57) **Abstract**

This application discloses a communication method, a device, and a communication system, and relates to the field of communication technologies, to reduce power consumption of a terminal device while ensuring user experience. In this application, a proxy server may be indicated, based on a sensed use status of the terminal device, to perform downlink sending of an application message by using a strategy adapted to the sensed use status. For example, when the terminal device is in a not-in-use state, the proxy server may send a downlink application message to the terminal device by using a specific strategy based on a message type of the application message, for example, forward an application message of a second type in real time, or cache application messages of a first type and then jointly forward the application messages. For another example, when the terminal device is in an in-use state, the proxy server may no longer cache the application message. In this way, while it is ensured that an important application message reaches the terminal device in a timely manner, unnecessary power consumption and disturbance caused to the terminal device by frequent wakeup of the terminal device due to an application message of low importance can be minimized.

## Description

This application claims priority to Chinese Patent Application No. 202311112196.9, filed with the China National Intellectual Property Administration on August 30, 2023 and entitled "COMMUNICATION METHOD, DEVICE, AND COMMUNICATION SYSTEM", which is incorporated herein by reference in its entirety.

### TECHNICAL FIELD

This application relates to the field of communication technologies, and in particular, to a communication method, a device, and a communication system.

### BACKGROUND

With rapid development of mobile internet technologies, intelligent terminal devices such as mobile phones have become an indispensable part of people's daily life and work. For example, a user may use applications installed on the terminal device for works, movies, chatting, reading, shopping, socializing, and games.

However, when the user is not using the terminal device, application servers corresponding to the applications also frequently sends some application messages (for example, a system notification, an advertisement, a communication message, and a software update package) to the terminal device. Therefore, the terminal device is frequently woken up to receive the application messages. Frequent wakeup of the terminal device causes high power consumption and much disturbance to the terminal device, affecting user experience.

### SUMMARY

This application provides a communication method, a device, and a communication system. Strategy control on sending an application message may be dynamically performed based on an actual use status of a terminal device, to reduce power consumption of the terminal device while ensuring that an important message can reach the terminal device in a timely manner.

To achieve the foregoing objective, the following technical solutions are used in this application.

According to a first aspect, a communication method is provided. The method is applied to a proxy server, and the method includes: The proxy server receives first information from a terminal device, where the first information indicates the proxy server to enable a message proxy service; the proxy server receives a first application message from an application server, and obtains a type of the first application message; and the proxy server caches the first application message when the first application message is of a first type, and sends the first application message to the terminal device when a first condition is met; or the proxy server forwards the first application message to the terminal device when the first application message is of a second type.

The proxy server is configured to provide a proxy strategy management service and the message proxy service. The proxy strategy management service is, for example, enabling/disabling the application message proxy service. The message proxy service is, for example, forwarding an application message in real time based on a proxy strategy, or caching application messages in batches and then jointly sending the application messages.

In an example, an application message of the first type may specifically have one or more of the following features: a low real-time requirement (for example, a non-real-time message), high power consumption, low importance, and the like. An application message of the second type may specifically have one or more of the following features: a high real-time requirement (for example, a real-time message), low power consumption, high importance, and the like.

In the solution provided in the first aspect, the proxy server may enable the message proxy service based on an indication of the terminal device, and after enabling the message proxy service, send a downlink application message to a terminal device side by using a specific strategy (for example, a first strategy or a second strategy) based on a specific type of the application message, for example, forward an application message of the second type in real time, or cache application messages of the first type and then jointly forward the application messages. Based on this, different strategies may be used based on an actual requirement of the terminal device. For example, when the terminal device is in a not-in-use state, while it is ensured that an application message that is important to a user can reach the terminal device in a timely manner, unnecessary power consumption and disturbance caused to the terminal device by frequent wakeup of the terminal device due to an application message of low importance can be minimized, thereby improving user experience.

In a possible implementation, obtaining the type of the first application message includes: querying a first list and/or a second list to obtain the type of the first application message. In an example, the first list and the second list may be stored in the proxy server and managed and maintained by the proxy server. In some examples, the proxy server may accept a modification made by a developer to the first list or the second list. Based on this, a type of an application message may be conveniently, quickly, and accurately identified, to use an adapted strategy for message proxy.

In a possible implementation, obtaining the type of the first application message includes: analyzing one or more of the following features of the first application message to obtain the type of the first application message: an application identifier of an application to which the first application message belongs, a bitstream feature, a packet feature code, a used protocol, and a data amount. The bitstream feature, for example, a sending frequency, the packet feature code, or the used protocol may indicate whether a packet (for example, an application message) carries a real-time message, and the used protocol and the data amount may indicate a power consumption degree of the application message. Based on this, a type of an application message may be conveniently, quickly, and accurately identified by analyzing specific content in the application message, to use an adapted strategy for message proxy.

In an example, when determining the type of the first application message based on the application identifier of the application to which the first application message belongs, the proxy server may find whether the application identifier is in a prestored list (for example, a first list or a second list), to determine the type of the first application message. The first list may include an identifier of an application of low importance and/or an application not frequently used by the user, and the second list may include an identifier of an application of high importance and/or an application frequently used by the user.

In a possible implementation, that the first condition is met includes one or more of the following: a cached message meets caching duration, a cached message exceeds a threshold of amount of cached data, and cached messages exceed a threshold of quantity of cached messages. The caching duration is accumulated duration of caching the application message of the first type. The threshold of amount of cached data is a total accumulated data amount of the cached application message of the first type. The quantity of cached messages is an accumulated quantity of cached application messages of the first type. Based on this, joint forwarding of cached application messages may be triggered by a condition. Through proper setting of the trigger condition, it is ensured that the cached application message can reach the terminal device, and unnecessary power consumption and disturbance caused to the terminal device by frequent wakeup of the terminal device due to an application message of low importance can be minimized, thereby improving user experience.

In a possible implementation, before sending the first application message to the terminal device, the method further includes: The proxy server receives another application message of the first type from the application server. Based on this, the proxy server may cache application messages of the first type in batches, to facilitate subsequent joint sending. In this way, it is ensured that the cached application message can reach the terminal device, and unnecessary power consumption and disturbance caused to the terminal device by frequent wakeup of the terminal device due to an application message of low importance are minimized.

In a possible implementation, the proxy server sends the first application message to the terminal device by using second information, and the second information further includes the another application message that is of the first type and that is received by the proxy server. Based on this, the proxy server may use a manner of batch caching and joint forwarding. In this way, it is ensured that the cached application message can reach the terminal device, and unnecessary power consumption and disturbance caused to the terminal device by frequent wakeup of the terminal device due to an application message of low importance are minimized, thereby improving user experience.

In a possible implementation, the method further includes: sending the second information to the terminal device when receiving third information from the terminal device, where the third information indicates the proxy server to disable the message proxy service, and the second information includes the first application message. Based on this, the message proxy service may be disabled based on an indication of the terminal device, and the cached application message is sent to the terminal device in a timely manner after the message proxy service is disabled.

In a possible implementation, the first information is sent to the proxy server when the terminal device is in a not-in-use state. Based on this, the proxy server may use different strategies based on an actual requirement of the terminal device, for example, enable the message proxy service when the terminal device is in the not-in-use state, to minimize unnecessary power consumption and disturbance caused to the terminal device by frequent wakeup of the terminal device due to an application message of low importance.

In a possible implementation, the method further includes: The proxy server receives fourth information from the terminal device, where the fourth information indicates the proxy server to disable the message proxy service; and the proxy server receives a second application message from the application server, and forwards the second application message to the terminal device. Based on this, the proxy server may use different strategies based on an actual requirement of the terminal device, for example, forward an application message in real time when the terminal device indicates to disable the message proxy service, to ensure that the application message can reach the terminal device in a timely manner and ensure normal use by the user.

In a possible implementation, the fourth information is sent to the proxy server when the terminal device is in an in-use state. Based on this, the proxy server may use different strategies based on an actual requirement of the terminal device, for example, send an application message to the terminal device by using a real-time forwarding strategy when the terminal device is in the in-use state, to ensure that the application message can reach the terminal device in a timely manner and ensure normal use by the user.

In a possible implementation, the proxy server sends an application message, for example, the first application message or the second application message, to the terminal device by using a heartbeat message. Based on this, an existing mechanism may be reused to send an application message, to improve adaptability between a communication process and the existing mechanism, simplify the communication process, and improve communication efficiency.

According to a second aspect, a communication method is provided. The method is applied to a terminal device, and the method includes: The terminal device sends first information to a proxy server when the terminal device is in a not-in-use state, where the first information indicates the proxy server to enable a message proxy service; or the terminal device sends fourth information to a proxy server when the terminal device is in an in-use state, where the fourth information indicates the proxy server to disable a message proxy service.

The proxy server is configured to provide a proxy strategy management service and the message proxy service. The proxy strategy management service is, for example, enabling/disabling the application message proxy service. The message proxy service is, for example, forwarding an application message in real time based on a proxy strategy, or caching application messages in batches and then jointly sending the application messages.

In the solution provided in the second aspect, the terminal device may indicate, based on an actual requirement of the terminal device, the terminal device to enable or disable the message proxy service, so that the proxy server can send a downlink application message to a terminal device side by using different strategies (for example, a first strategy or a second strategy). For example, when the terminal device is in the not-in-use state, the terminal device may indicate the proxy server to enable the message proxy service, to minimize unnecessary power consumption and disturbance caused to the terminal device by frequent wakeup of the terminal device due to an application message of low importance. For another example, when the terminal device is in the in-use state, the terminal device may indicate the proxy server to disable the message proxy service, to ensure that an application message that is important to a user can reach the terminal device in a timely manner, thereby improving user experience.

In a possible implementation, the terminal device is in the not-in-use state, and the method further includes: The terminal device receives second information from the proxy server, where the second information includes a plurality of application messages. Based on this, when the terminal device is in the not-in-use state, the proxy server may cache application messages in batches based on an indication of the terminal device and then jointly forward the application messages to the terminal device, to minimize unnecessary power consumption and disturbance caused to the terminal device by frequent wakeup of the terminal device due to an application message of low importance.

In a possible implementation, the terminal device is in the in-use state, and the method further includes: The terminal device receives an application message that is from an application server and that is forwarded by the proxy server in real time. Based on this, when the terminal device is in the in-use state, the proxy server may forward an application message to the terminal device in real time based on an indication of the terminal device, to ensure that an application message that is important to the user can reach the terminal device in a timely manner.

In a possible implementation, the method further includes: The terminal device obtains a use status of the terminal device based on one or more of the following information: whether a screen is turned on, whether a user operation is received, whether the terminal device is unlocked, whether a task is running in foreground, whether the terminal device is being charged, and time information. Based on this, the terminal device may quickly and accurately obtain the use status of the terminal device, and then may select different application message sending/receiving strategies based on the actual use status.

According to a third aspect, a proxy server is provided. The proxy server includes: a message proxy unit, configured to: receive first information from a terminal device, where the first information indicates the proxy server to enable a message proxy service; and receive a first application message from an application server, and obtain a type of the first application message; and a strategy management unit, configured to: cache the first application message when the first application message is of a first type, and send the first application message to the terminal device when a first condition is met; or forward the first application message to the terminal device when the first application message is of a second type.

In the solution provided in the third aspect, the proxy server may enable the message proxy service based on an indication of the terminal device, and after enabling the message proxy service, send a downlink application message to a terminal device side by using a specific strategy (for example, a first strategy or a second strategy) based on a specific type of the application message, for example, forward an application message of the second type in real time, or cache application messages of the first type and then jointly forward the application messages. Based on this, different strategies may be used based on an actual requirement of the terminal device. For example, when the terminal device is in a not-in-use state, while it is ensured that an application message that is important to a user can reach the terminal device in a timely manner, unnecessary power consumption and disturbance caused to the terminal device by frequent wakeup of the terminal device due to an application message of low importance can be minimized, thereby improving user experience.

In a possible implementation, the strategy management unit is specifically configured to query a first list and/or a second list to obtain the type of the first application message. In an example, the first list and the second list may be stored in the proxy server and managed and maintained by the proxy server. In some examples, the proxy server may accept a modification made by a developer to the first list or the second list. Based on this, a type of an application message may be conveniently, quickly, and accurately identified, to use an adapted strategy for message proxy.

In a possible implementation, the strategy management unit is specifically configured to analyze one or more of the following features of the first application message to obtain the type of the first application message: an application identifier of an application to which the first application message belongs, a bitstream feature, a packet feature code, a used protocol, and a data amount. The bitstream feature, for example, a sending frequency, the packet feature code, or the used protocol may indicate whether a packet (for example, an application message) carries a real-time message, and the used protocol and the data amount may indicate a power consumption degree of the application message. Based on this, a type of an application message may be conveniently, quickly, and accurately identified by analyzing specific content in the application message, to use an adapted strategy for message proxy.

In a possible implementation, that the first condition is met includes one or more of the following: a cached message meets caching duration, a cached message exceeds a threshold of amount of cached data, and cached messages exceed a threshold of quantity of cached messages. The caching duration is accumulated duration of caching the application message of the first type. The threshold of amount of cached data is a total accumulated data amount of the cached application message of the first type. The quantity of cached messages is an accumulated quantity of cached application messages of the first type. Based on this, joint forwarding of cached application messages may be triggered by a condition. Through proper setting of the trigger condition, it is ensured that the cached application message can reach the terminal device, and unnecessary power consumption and disturbance caused to the terminal device by frequent wakeup of the terminal device due to an application message of low importance can be minimized, thereby improving user experience.

In a possible implementation, before sending the first application message to the terminal device, the message proxy unit is further configured to receive another application message of the first type from the application server. Based on this, the proxy server may cache application messages of the first type in batches, to facilitate subsequent joint sending. In this way, it is ensured that the cached application message can reach the terminal device, and unnecessary power consumption and disturbance caused to the terminal device by frequent wakeup of the terminal device due to an application message of low importance are minimized.

In a possible implementation, the message proxy unit sends the first application message to the terminal device by using second information, and the second information further includes the another application message that is of the first type and that is received by the proxy server. Based on this, the proxy server may use a manner of batch caching and joint forwarding. In this way, it is ensured that the cached application message can reach the terminal device, and unnecessary power consumption and disturbance caused to the terminal device by frequent wakeup of the terminal device due to an application message of low importance are minimized, thereby improving user experience.

In a possible implementation, the message proxy unit sends the second information to the terminal device when receiving third information from the terminal device, where the third information indicates the proxy server to disable the message proxy service, and the second information includes the first application message. Based on this, the message proxy service may be disabled based on an indication of the terminal device, and the cached application message is sent to the terminal device in a timely manner after the message proxy service is disabled.

In a possible implementation, the first information is sent to the proxy server when the terminal device is in a not-in-use state. Based on this, the proxy server may use different strategies based on an actual requirement of the terminal device, for example, enable the message proxy service when the terminal device is in the not-in-use state, to minimize unnecessary power consumption and disturbance caused to the terminal device by frequent wakeup of the terminal device due to an application message of low importance.

In a possible implementation, the message proxy unit is further configured to: receive fourth information from the terminal device, where the fourth information indicates the proxy server to disable the message proxy service; and receive a second application message from the application server, and forward the second application message to the terminal device. Based on this, the proxy server may use different strategies based on an actual requirement of the terminal device, for example, forward an application message in real time when the terminal device indicates to disable the message proxy service, to ensure that the application message can reach the terminal device in a timely manner and ensure normal use by the user.

In a possible implementation, the fourth information is sent to the proxy server when the terminal device is in an in-use state. Based on this, the proxy server may use different strategies based on an actual requirement of the terminal device, for example, send an application message to the terminal device by using a real-time forwarding strategy when the terminal device is in the in-use state, to ensure that the application message can reach the terminal device in a timely manner and ensure normal use by the user.

In a possible implementation, the message proxy unit sends an application message, for example, the first application message or the second application message, to the terminal device by using a heartbeat message. Based on this, an existing mechanism may be reused to send an application message, to improve adaptability between a communication process and the existing mechanism, simplify the communication process, and improve communication efficiency.

According to a fourth aspect, a terminal device is provided. The terminal device includes a proxy management unit, configured to: send first information to a proxy server when the terminal device is in a not-in-use state, where the first information indicates the proxy server to enable a message proxy service; or send fourth information to a proxy server when the terminal device is in an in-use state, where the fourth information indicates the proxy server to disable a message proxy service.

In the solution provided in the fourth aspect, the terminal device may indicate, based on an actual requirement of the terminal device, the terminal device to enable or disable the message proxy service, so that the proxy server can send a downlink application message to a terminal device side by using different strategies (for example, a first strategy or a second strategy). For example, when the terminal device is in the not-in-use state, the terminal device may indicate the proxy server to enable the message proxy service, to minimize unnecessary power consumption and disturbance caused to the terminal device by frequent wakeup of the terminal device due to an application message of low importance. For another example, when the terminal device is in the in-use state, the terminal device may indicate the proxy server to disable the message proxy service, to ensure that an application message that is important to a user can reach the terminal device in a timely manner, thereby improving user experience.

In a possible implementation, the terminal device is in the not-in-use state, and the terminal device further includes a message sending/receiving unit, configured to receive second information from the proxy server, where the second information includes a plurality of application messages. Based on this, when the terminal device is in the not-in-use state, the proxy server may cache application messages in batches based on an indication of the terminal device and then jointly forward the application messages to the terminal device, to minimize unnecessary power consumption and disturbance caused to the terminal device by frequent wakeup of the terminal device due to an application message of low importance.

In a possible implementation, the terminal device is in the in-use state, and the message sending/receiving unit is further configured to receive an application message that is from an application server and that is forwarded by the proxy server in real time. Based on this, when the terminal device is in the in-use state, the proxy server may forward an application message to the terminal device in real time based on an indication of the terminal device, to ensure that an application message that is important to the user can reach the terminal device in a timely manner.

In a possible implementation, the proxy management unit is further configured to obtain a use status of the terminal device based on one or more of the following information: whether a screen is turned on, whether a user operation is received, whether the terminal device is unlocked, whether a task is running in foreground, whether the terminal device is being charged, and time information. Based on this, the terminal device may quickly and accurately obtain the use status of the terminal device, and then may select different application message sending/receiving strategies based on the actual use status.

According to a fifth aspect, a proxy server is provided. The proxy server includes: a transceiver, configured to receive and send a radio signal; a memory, configured to store computer program instructions; and a processor, configured to execute the computer program instructions to support the proxy server in implementing the method in any possible implementation of the first aspect.

According to a sixth aspect, a terminal device is provided. The terminal device includes: a transceiver, configured to receive and send a radio signal; a memory, configured to store computer program instructions; and a processor, configured to execute the computer program instructions to support the terminal device in implementing the method in any possible implementation of the first aspect.

According to a seventh aspect, a communication system is provided. The communication system includes the proxy server according to either the third aspect or the fifth aspect and the terminal device according to either the fourth aspect or the sixth aspect.

According to an eighth aspect, a computer-readable storage medium is provided. The computer-readable storage medium stores computer program instructions. When the computer program instructions are executed by a processor, the method in any possible implementation of the first aspect or the second aspect is implemented.

According to a ninth aspect, a computer program product including instructions is provided. When the computer program product is run on a computer, the computer is enabled to implement the method in any possible implementation of the first aspect or the second aspect.

According to a tenth aspect, a chip system is provided. The chip system includes a processing circuit and a storage medium. The storage medium stores computer program instructions. When the computer program instructions are executed by the processor, the method in any possible implementation of the first aspect or the second aspect is implemented. The chip system may include a chip, or may include a chip and another discrete device.

### BRIEF DESCRIPTION OF DRAWINGS

FIG. 1 is a diagram of a notification reminder management interface of an application according to an embodiment of this application;
FIG. 2 is a diagram of a power usage mode management interface according to an embodiment of this application;
FIG. 3 is a diagram of a transmission process of an application message according to an embodiment of this application;
FIG. 4 is a diagram of a communication architecture of an application message according to an embodiment of this application;
FIG. 5 is a diagram of another communication architecture of an application message according to an embodiment of this application;
FIG. 6 is a flowchart of transmitting an application message according to an embodiment of this application;
FIG. 7 is an interaction diagram of a communication method of a terminal device in a not-in-use state according to an embodiment of this application;
FIG. 8 is an interaction diagram of a communication method of a terminal device in an in-use state according to an embodiment of this application; and
FIG. 9A and FIG. 9B are an interaction diagram of a communication method when a use status of a terminal changes according to an embodiment of this application.

### DESCRIPTION OF EMBODIMENTS

The following describes technical solutions in embodiments of this application with reference to the accompanying drawings in embodiments of this application. In descriptions of embodiments of this application, unless otherwise specified, "/" means "or". For example, A/B may represent A or B. In this specification, "and/or" is merely an association relationship for describing associated objects, and represents that three relationships may exist. For example, A and/or B may represent the following three cases: Only A exists, both A and B exist, and only B exists. In addition, in the descriptions of embodiments of this application, "a plurality of" means two or more.

In the following, terms "first", "second", and the like are merely used to distinguish between different described objects, and constitute no limitation on locations, a sequence, priorities, quantities, content, or the like of the described objects. For example, if the described object is a "field", ordinal numbers before "field" in a "first field" and a "second field" do not limit locations or a sequence of the "fields", and "first" and "second" do not limit whether "fields" modified by "first" and "second" are in a same message, and do not limit a sequence of the "first field" and the "second field". For another example, if the described object is a "level", ordinal numbers before "level" in a "first level" and a "second level" do not limit priorities of the "levels". For another example, a quantity of described objects is not limited by an ordinal number, and may be one or more. In an example of a "first device", a quantity of "devices" may be one or more. In addition, objects modified by different prefix words may be the same or different. For example, if the described object is a "device", a "first device" and a "second device" may be devices of a same type or devices of different types. For another example, if the described object is "information", "first information" and "second information" may be information with same content or information with different content. In conclusion, in embodiments of this application, use of prefix words such as ordinal numbers used to distinguish between the described objects constitutes no limitation on the described objects. For descriptions of the described objects, refer to context descriptions in the claims or embodiments. The use of such prefix words should not constitute an unnecessary limitation.

In addition, in embodiments of this application, a "connection" may be a direct connection or an indirect connection, and may be an electrical connection or a communication connection. For example, a connection between two electrical elements A and B may mean that A is directly connected to B, may mean that A is indirectly connected to B through another electrical element or a connection medium, or may mean that A is indirectly connected to B through another communication device or a communication medium, provided that A and B can communicate with each other.

It is known that for a terminal device, there is high power consumption if a screen is turned on and communication is performed. When a user uses the terminal device, the screen of the terminal device is usually turned on. When the user does not use the terminal device, the screen of the terminal device is usually turned off. However, in a process in which the screen of the terminal device is turned off, the terminal device further communicates with another device in background, for example, receives application messages such as a system notification, an advertisement, a communication message, and a software update package sent by a server (briefly referred to as an "application server" below) corresponding to an application installed on the terminal device. These application messages include a large quantity of messages that are not important to the user or have a low real-time requirement. Therefore, when the user does not use the terminal device, communication with the application server causes high unnecessary power consumption to the terminal device.

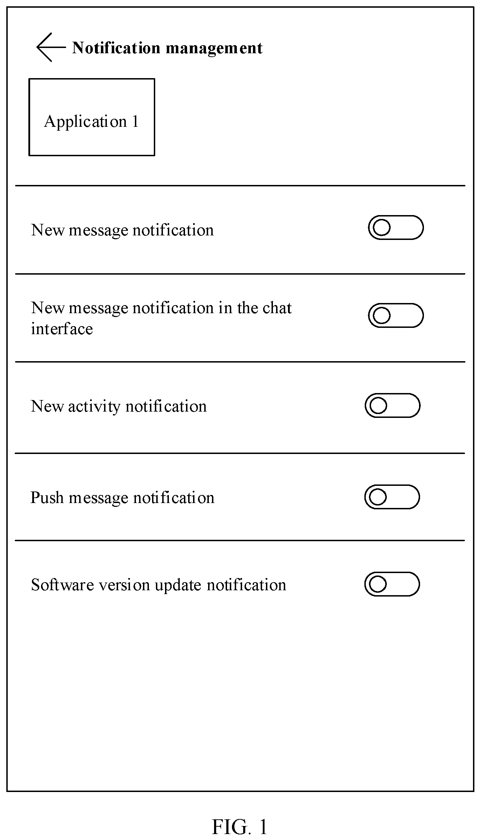

To reduce unnecessary power consumption caused to the terminal device by an application message that is not important to the user or has a low real-time requirement, in another possible implementation, the terminal device may provide a configuration option of a message notification function to the user, and the user may manually perform notification reminder management on an application message of each application (FIG. 1 is a diagram of a notification reminder management interface of an application). However, in the method, because there are many setting items for each application, operations are very cumbersome for the user.

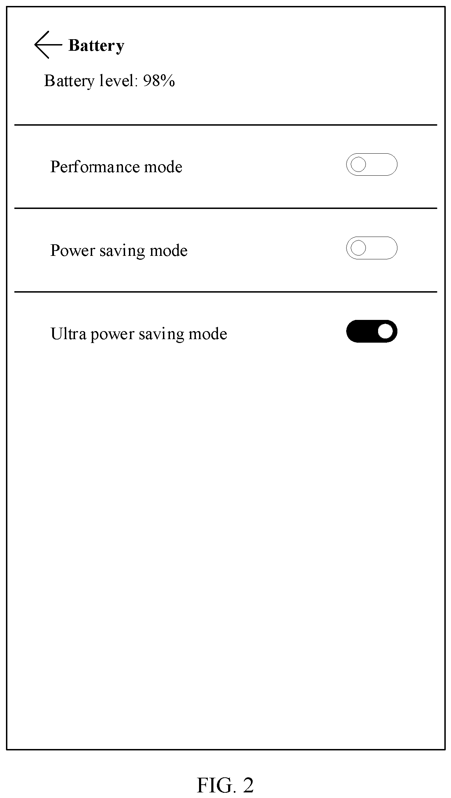

To reduce unnecessary power consumption caused to the terminal device by an application message that is not important to the user or has a low real-time requirement, and simplify an interface operation of the user, in a possible implementation, the terminal device may provide a plurality of power usage modes to the user, for example, provide a performance mode, a power saving mode, and an ultra power saving mode shown in FIG. 2. The user may select the power saving mode or the ultra power saving mode, to disable or reduce some functions (for example, an automatic synchronization function, a 5G communication function, and an application function) to reduce power consumption of the terminal device.

However, the foregoing "one-size-fits-all" power usage mode management solution further affects normal use of the terminal device by the user. For example, the terminal device in the ultra power saving mode cannot normally receive an application message that is important to the user or has a high real-time requirement, for example, an email or an instant message. For another example, the terminal device in the ultra power saving mode cannot provide services of some conventional applications (for example, a camera, music, and a video) to the user. In addition, based on the solution, when the user needs to use some functions, a power usage mode setting interface needs to be launched again to set the power usage mode from the ultra power saving mode to the power saving mode or the performance mode or from the power saving mode to the performance mode. Therefore, operations are still cumbersome for the user, resulting in very poor user experience in the method.

To resolve the problem existing in the conventional technology, embodiments of this application provide a communication method. In the method, strategy control on sending an application message may be dynamically performed based on an actual use status of a terminal device. For example, when the terminal device is in an in-use state, an application message is sent to the terminal device based on a conventional communication strategy; or when the terminal device is in a not-in-use state, an application message of a first type is sent to the terminal device by using a communication strategy of batch caching and joint sending, or when the terminal device is in a not-in-use state, an application message of a second type is sent to the terminal device based on a conventional communication strategy. The application message of the first type is, for example, an application message that is not important to a user or has a low real-time requirement, and the application message of the second type is, for example, an application message that is important to the user or has a high real-time requirement. Based on this, power consumption of the terminal device can be minimized while an important function of the terminal device is ensured.

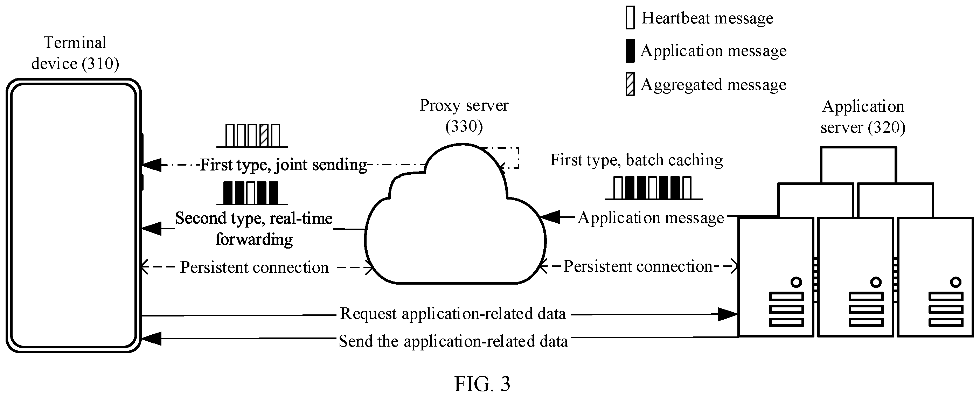

For example, FIG. 3 is a diagram of a communication process of an application message according to an embodiment of this application. As shown in FIG. 3, the communication architecture may include a terminal device 310, an application server 320, and a proxy server 330.

The terminal device 310 may be configured to provide a corresponding application function service to a user through one or more applications, for example, a social function (for example, an instant messaging function), a video service, an audio service, a photographing function, a document editing function, an email sending/receiving function, a shopping function, and a game function.

When the terminal device is in an in-use state, as shown in FIG. 3, the terminal device 310 may request application-related data from the application server 320 based on an operation of the user. Correspondingly, the application server 320 may send the application-related data to the terminal device 310 based on the request of the terminal device 310.

When the terminal device is in a not-in-use state, as shown in FIG. 3, the terminal device 310 may maintain a persistent connection to the proxy server 330, to maintain a persistent connection to the application server 320 through the proxy server 330. For example, a heartbeat message may be periodically sent between the application server 320 and the proxy server 330 and between the proxy server 330 and the terminal device 310, to maintain the persistent connection.

The persistent connection in this embodiment of this application may include but is not limited to a hypertext transfer protocol (hypertext transfer protocol, HTTP) persistent connection (persistent connection), a transmission control protocol (transmission control protocol, TCP) connection, a user datagram protocol (user datagram protocol, UDP) connection, or an internet of things protocol (for example, WebSocket, RESTful, a message queuing telemetry transport (message queuing telemetry transport, MQTT) protocol, or a constrained application protocol (constrained application protocol, CoAP)). This is not specifically limited in this embodiment of this application, and may be determined based on a specific device function and a use scenario. After the persistent connection is established, a signal may be continuously sent/received by using a heartbeat message based on the persistent connection and with low power consumption.

As shown in FIG. 3, when the terminal device is in the not-in-use state, if an application message of a first type that is from the application server 320 and whose target device is the terminal device 310 is received, the proxy server 330 may cache application messages of the first type in batches and then jointly send the cached messages to the terminal device 310 as an aggregated message; or if an application message of a second type that is from the application server 320 and whose target device is the terminal device 310 is received, the proxy server 330 may forward the application message of the second type to the terminal device 310 in real time.

Based on the device-cloud collaboration communication solution shown in FIG. 3, a use status of the terminal device may be sensed on a terminal device side, a strategy adapted to the sensed use status of the terminal device is used based on the sensed use status, and a downlink application message is sent to the terminal device side based on a message type of the application message. A message proxy service is controlled and managed based on the sensed use status, so that when the terminal device is in the in-use state, it can be ensured that the terminal device normally provides a service to the user, and when the terminal device is in the not-in-use state, application messages of the first type can be cached in batches and jointly sent without affecting user experience, to reduce unnecessary power consumption and disturbance caused to the terminal device by frequent wakeup of the terminal device by the application server, thereby improving user experience.

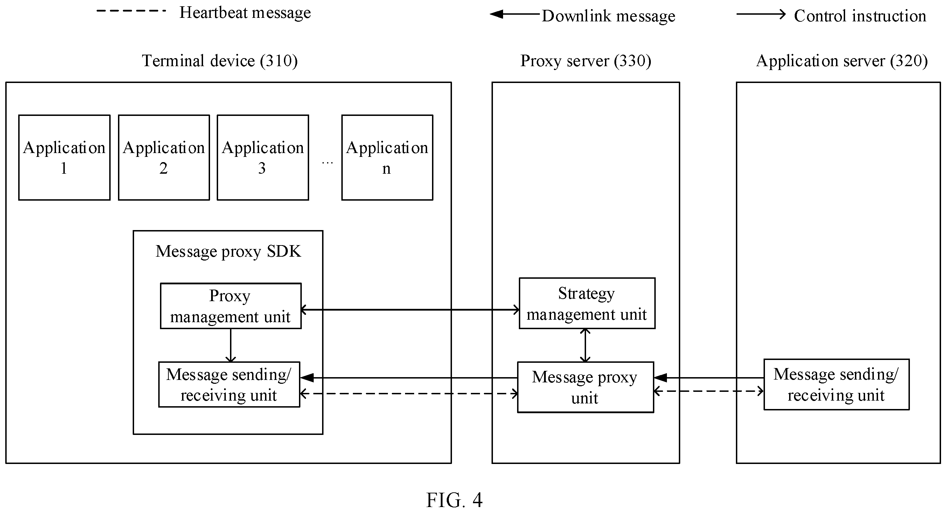

In an example, structures of the terminal device 310, the application server 320, and the proxy server 330 shown in FIG. 3 may be shown in FIG. 4. As shown in FIG. 4, an application (for example, denoted as an application 1) to which the application server 320 provides a service is installed on the terminal device 310. The terminal device may provide a human-computer interaction interface or an interface for using the application 1 to the user through the application 1, and provide a corresponding application function service to the user based on an operation of the user by communicating with the application server 320 through the application 1, for example, a social function (for example, an instant messaging function), a video service, an audio service, a photographing function, a document editing function, an email sending/receiving function, a shopping function, and a game function.

For example, the terminal device 310 may include a message proxy software development kit (software development kit, SDK) shown in FIG. 4. The message proxy SDK includes a message sending/receiving unit, configured to provide an application message sending/receiving function.

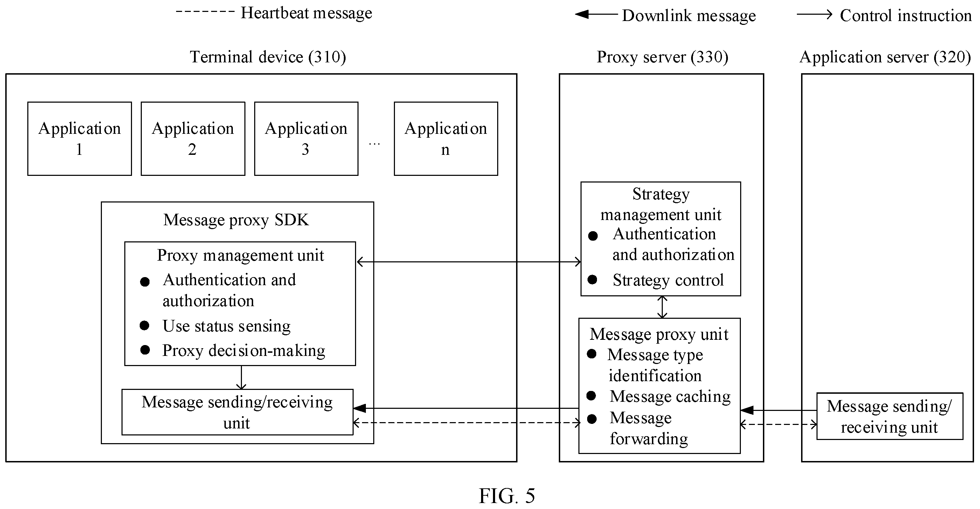

In some embodiments, as shown in FIG. 4, the message proxy SDK may further include a proxy management unit, configured to provide message proxy management, for example, provide functions such as authentication and authorization, use status sensing, and proxy decision-making shown in FIG. 5. For example, the proxy management unit may determine, based on the sensed use status of the terminal device, whether to enable application message proxy, for example, enable the application message proxy service when sensing that the terminal device is in the not-in-use state, or disable the application message proxy service when sensing that the terminal device is in the in-use state.

In an example, the terminal device 310 may sense the use status of the terminal device based on one or more of the following information: whether a screen is turned on, whether a user operation is received, whether the terminal device 310 is unlocked, whether a task is running in foreground, whether the terminal device 310 is being charged, and time information. For example, when identifying that the screen of the terminal device 310 is turned on, and the terminal device 310 is unlocked, the terminal device 310 may consider that the terminal device 310 is in the in-use state; or when identifying that the screen of the terminal device 310 is turned off, the terminal device 310 is locked, and the time information is 02:00 a.m., the terminal device 310 may consider that the terminal device 310 is in the not-in-use state. A specific basis, method, and process for sensing the use status by the terminal device 310 are not specifically limited in this embodiment of this application, and may be determined based on a device capability, a configuration, a specific use scenario, and the like.

The application server 320 is configured to provide related data of the application 1. For example, the application server 320 may send an application message to the terminal device 310 based on a request of the application 1 on the terminal device 310, or actively send an application message, for example, a system notification, an advertisement, a communication message, a software update package, or another message, to the terminal device 310 when there is an application message for the terminal device 310. For example, the application server 320 may include a message sending/receiving unit shown in FIG. 4.

The proxy server 330 is configured to provide a proxy strategy management service and the message proxy service.

The proxy strategy management service is, for example, enabling/disabling the application message proxy service.

The message proxy service is, for example, caching application messages of the first type from the application server 320 in batches and then jointly sending the application messages of the first type to the terminal device 310, or forwarding an application message of the second type from the application server 320 to the terminal device 310 in real time, when the application message proxy service is enabled. Alternatively, the message proxy service is, for example, forwarding all application messages from the application server 320 to the terminal device 310 in real time when the application message proxy service is disabled.

In some embodiments, as shown in FIG. 4, the proxy server 330 may include a strategy management unit and a message proxy unit. The strategy management unit is configured to provide the proxy strategy management service, and the message proxy unit is configured to provide the message proxy service.

For example, as shown in FIG. 5, the strategy management unit may be configured to provide authentication and authorization and strategy control, for example, enable the application message proxy service of the message proxy unit or disable the application message proxy service of the message proxy unit based on an indication of the terminal device 310 after the authentication and authorization succeed. The message proxy unit may be configured to provide message type identification, message caching, and message forwarding services. For example, after the application message proxy service is enabled, when it is identified that an application message from the application server 320 is an application message of the first type, the application message is sent to the terminal device 310 by using a first strategy. For another example, after the application message proxy service is enabled, when it is identified that an application message from the application server 320 is an application message of the second type, the application message is sent to the terminal device 310 by using a second strategy.

The first strategy is, for example, caching an application message, and when a preset condition (for example, a first condition) is met, aggregating cached application messages together and sending the application messages to the terminal device 310 as an aggregated message. The second strategy is, for example, forwarding an application message to the terminal device 310 in real time. In some embodiments, the first strategy further includes the first condition, and the first condition includes caching duration, a quantity of cached messages, an amount of cached data, and the like. This is not specifically limited in this embodiment of this application.

In some embodiments, the strategy management unit is further configured to provide message type management, for example, manage a feature of a message of the first type, or manage a feature of a message of the second type.

In some embodiments, the strategy management unit is further configured to provide a proxy strategy modification service, for example, accept a modification made by a developer to the first condition or the feature of the message of the first type or the second type.

It should be noted that in addition to the application 1, another application may be installed on the terminal device, for example, an application 2, an application 3, ..., and an application n shown in FIG. 4 or FIG. 5, where n is an integer greater than 3, and each application may correspond to an application server that provides a service to the application. In FIG. 3, FIG. 4, and FIG. 5, only an example in which the application server 320 provides the related data of the application 1 is used.

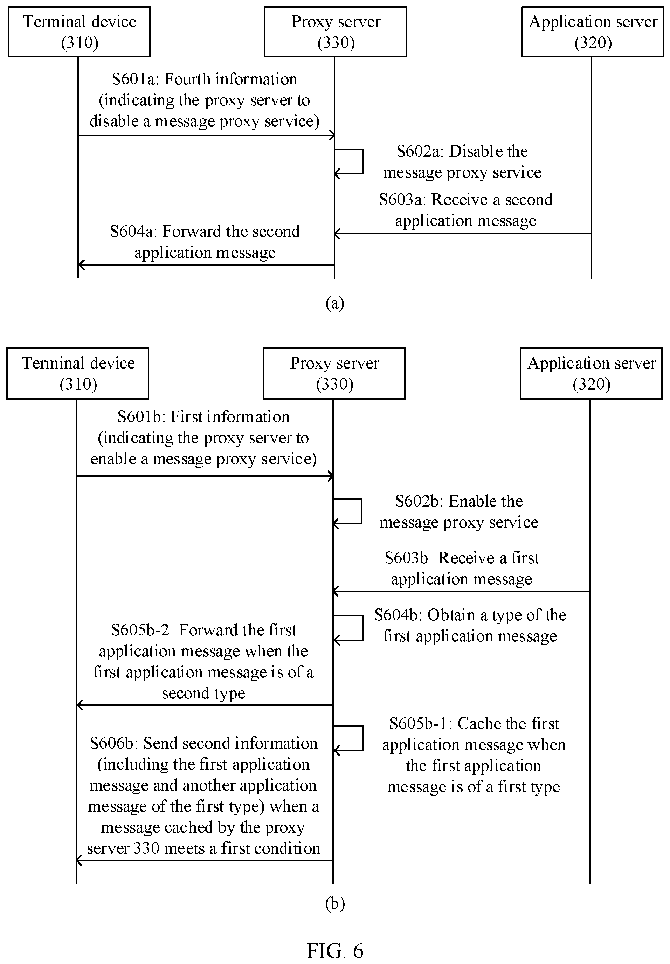

With reference to the accompanying drawings, the following describes, by using the communication architecture shown in FIG. 3, FIG. 4, or FIG. 5 as an example, in detail a communication method provided in an embodiment of this application. As shown in FIG. 6, a communication method provided in an embodiment of this application may include S601a to S604a shown in (a) in FIG. 6, or include S601b to S604b and S605b-2 shown in (b) in FIG. 6, or include S601b to S604b, S605b-1, and S606b shown in (b) in FIG. 6.

In a scenario in which a proxy server 330 disables a message proxy service for a terminal device 310, as shown in (a) in FIG. 6, the communication method provided in this embodiment of this application may include S601a to S604a.

S601a: The proxy server 330 receives fourth information from the terminal device 310, where the fourth information indicates the proxy server to disable the message proxy service.

In an example, the fourth information may be sent to the proxy server when the terminal device senses that the terminal device is in an in-use state.

For example, a structure of the terminal device 310 is shown in FIG. 4 or FIG. 5. When a proxy management unit provided in a message proxy SDK senses that the terminal device is in the in-use state, the terminal device 310 may send the fourth information to a strategy management unit in the proxy server 330 through the proxy management unit provided in the message proxy SDK, to indicate the proxy server to disable the message proxy service.

S602a: The proxy server 330 disables the message proxy service.

For example, a structure of the proxy server 330 is shown in FIG. 4 or FIG. 5. After receiving the fourth information from the terminal device 310, the strategy management unit in the proxy server 330 may indicate, based on the fourth information, a message proxy unit to disable the message proxy service.

After disabling the message proxy service, the message proxy unit in the proxy server 330 may send an application message to the terminal device 310 by using a second strategy. The second strategy is, for example, forwarding an application message to the terminal device 310 in real time.

S603a: The proxy server 330 receives a second application message from an application server 320.

The second application message may include but is not limited to the following messages: a system notification message, an advertisement message, an instant messaging message, a call request message, a software update package, and the like. Specific content, a form, an objective, and the like of the second application message are not specifically limited in this embodiment of this application.

For example, structures of the proxy server 330 and the application server 320 are shown in FIG. 4 or FIG. 5. The proxy server 330 may receive, through the message proxy unit, the second application message sent by the application server 320 through a message sending/receiving unit.

S604a: The proxy server 330 forwards the second application message to the terminal device 310.

For example, the message proxy unit in the proxy server 330 may forward the second application message to the terminal device 310 in real time based on an indication of the strategy management unit by using the second strategy, to ensure that the terminal device can normally provide a service to a user.

In a scenario in which a proxy server 330 enables a message proxy service for a terminal device 310, as shown in (b) in FIG. 6, the communication method provided in this embodiment of this application may include the following steps.

S601b: The proxy server 330 receives first information from the terminal device 310, where the first information indicates the proxy server to enable the message proxy service.

In an example, the first information may be sent to the proxy server when the terminal device senses that the terminal device is in a not-in-use state.

For example, a structure of the terminal device 310 is shown in FIG. 4 or FIG. 5. When a proxy management unit provided in a message proxy SDK senses that the terminal device is in the not-in-use state, the terminal device 310 may send the first information to a strategy management unit in the proxy server 330 through the proxy management unit provided in the message proxy SDK, to indicate the proxy server to enable the message proxy service.

S602b: The proxy server 330 enables the message proxy service.

For example, a structure of the proxy server 330 is shown in FIG. 4 or FIG. 5. After receiving the first information from the terminal device 310, the strategy management unit in the proxy server 330 may indicate, based on the first information, a message proxy unit to enable the message proxy service.

After enabling the message proxy service, the message proxy unit in the proxy server 330 may send an application message to the terminal device 310 by using a first strategy. The first strategy is, for example, caching an application message, and when a first condition is met, aggregating cached application messages together and sending the application messages to the terminal device 310 as an aggregated message.

S603b: The proxy server 330 receives a first application message from an application server 320.

The first application message may include but is not limited to the following messages: a system notification message, an advertisement message, an instant messaging message, a call request message, a software update package, and the like. Specific content, a form, an objective, and the like of the first application message are not specifically limited in this embodiment of this application.

For example, structures of the proxy server 330 and the application server 320 are shown in FIG. 4 or FIG. 5. The proxy server 330 may receive, through the message proxy unit, the first application message sent by the application server 320 through a message sending/receiving unit.

S604b: The proxy server 330 obtains a type of the first application message.

The type of the first application message may include but is not limited to a first type or a second type.

In an example, an application message of the first type may specifically have one or more of the following features: a low real-time requirement (for example, a non-real-time message), high power consumption, low importance, and the like. An application message of the second type may specifically have one or more of the following features: a high real-time requirement (for example, a real-time message), low power consumption, high importance, and the like.

For example, the application message of the first type is a message that has a low real-time requirement, high power consumption, and low importance, for example, a system notification, an advertisement, an official account push, or a group message, and the application message of the second type is a message that has a high real-time requirement and high importance, for example, a call request message (for example, an audio/video call request), a red packet message, or an instant messaging message.

In some embodiments of this application, the type of the first application message may be preset by a developer in the proxy server 330.

In some embodiments, the proxy server 330 may analyze one or more pieces of information such as a bitstream feature, a packet feature code, and a used protocol of the first application message, to identify a real-time requirement of the first application message (for example, whether the first application message is a real-time message), so as to identify the type of the application message.

The bitstream feature is, for example, a sending frequency corresponding to the first application message. For example, if the sending frequency corresponding to the first application message is higher than a frequency (for example, 1 second), it indicates that the first application message is a real-time message; or if the sending frequency corresponding to the first application message is not higher than a frequency, it indicates that the first application message is a non-real-time message. The packet feature code may indicate whether a packet carries a real-time message. For example, if the packet feature code is a first feature code, it indicates that the first application message is a real-time message; or if the packet feature code is a second feature code, it indicates that the first application message is a non-real-time message. The used protocol may indicate whether a packet carries a real-time message. For example, if the packet uses a real-time communication (real-time communication, RTC) protocol, it indicates that the first application message is a real-time message such as an audio/video stream; or if the packet uses a UDP protocol, it indicates that the first application message is a non-real-time message such as an advertisement. The real-time message is, for example, a call request message (for example, an audio/video call request), a red packet message, or an instant message (instant message, IM) (for example, an instant messaging message). The non-real-time message is, for example, an official account push or a software update package.

In some embodiments, the proxy server 330 may analyze a data amount and the like carried in the first application message, to identify a power consumption degree of the first application message, so as to identify the type of the application message.

For example, if the data amount carried in the first application message is greater than a data amount threshold, it indicates that power consumption of the first application message is high; or if the data amount carried in the first application message is not greater than a data amount threshold, it indicates that power consumption of the first application message is low. An application message with high power consumption is, for example, a software update package or an official account push. An application message with low power consumption is, for example, a read packet message or an instant messaging message.

In some embodiments, the proxy server 330 may analyze whether an application to which the first application message belongs is in a first list and/or in a second list, to identify the type of the application message. The first list and the second list are stored in the proxy server 330 and managed and maintained by the proxy server 330. In some embodiments, the proxy server 330 may accept a modification made by a developer to the first list or the second list.

For example, if an identifier of the application to which the first application message belongs is in the first list, it indicates that the first application message has low importance; or if an identifier of the application to which the first application message belongs is not in the first list and/or is in the second list, it indicates that the first application message has high importance. An application in the first list is an application not frequently used by the user, for example, a game application or a sports application. An application in the second list is an application frequently used by the user, for example, an instant messaging application, an office application, a video application, or a live broadcast application.

For example, the structures of the proxy server 330 and the application server 320 are shown in FIG. 4 or FIG. 5. The proxy server 330 may obtain the type of the first application message through the message proxy unit.

It should be noted that the foregoing methods for identifying the real-time requirement, the power consumption degree, the importance, and the like of the first application message are merely used as examples. A basis, a specific method, and a process for identifying the foregoing information are not limited in this embodiment of this application, and may be determined based on a specific use scenario and a software/hardware capability of the device.

Further, as shown in (b) in FIG. 6, the proxy server performs S605b-1 when the first application message is of the first type; or the proxy server performs S605b-2 when the first application message is of the second type.

S605b-1: The proxy server 330 caches the first application message.

For example, the structures of the proxy server 330 and the application server 320 are shown in FIG. 4 or FIG. 5. The proxy server 330 may cache the first application message in storage space of the proxy server 330 through the message proxy unit.

S605b-2: The proxy server 330 forwards the first application message to the terminal device 310.

For example, the structures of the proxy server 330 and the application server 320 are shown in FIG. 4 or FIG. 5. The proxy server 330 may forward the first application message to the terminal device 310 in real time through the message proxy unit.

As shown in FIG. 6, similar to S603b to S605b-1, the proxy server 330 may further cache another application message (for example, a third application message) of the first type from the application server.

S606b: The proxy server 330 sends second information to the terminal device 310 when a message cached by the proxy server 330 meets the first condition, where the second information includes the first application message and the another application message.

That the first condition is met may include but is not limited to one or more of the following: a cached application message meets caching duration, the cached application message exceeds a threshold of amount of cached data, and the cached application message exceeds a threshold of quantity of cached messages. The caching duration is accumulated duration of caching the application message of the first type. The threshold of amount of cached data is a total accumulated data amount of the cached application message of the first type. The quantity of cached messages is an accumulated quantity of cached application messages of the first type.

For example, the structures of the proxy server 330 and the application server 320 are shown in FIG. 4 or FIG. 5. In an example, the proxy server 330 may send the second information to the terminal device through the message proxy unit when the message cached by the proxy server 330 meets the first condition.

For example, the message proxy unit in the proxy server 330 may send the cached message to the terminal device 310 by using the second information when the cached application message meets the caching duration, that is, the message proxy unit in the proxy server 330 may send the cached message to the terminal device 310 by using the second information at an interval of the caching duration.

For another example, the message proxy unit in the proxy server 330 may send the cached message to the terminal device 310 by using the second information when a data amount of the cached message exceeds the threshold of amount of cached data.

For another example, the message proxy unit in the proxy server 330 may send the cached message to the terminal device 310 by using the second information when the quantity of cached messages exceeds the threshold of quantity of cached messages.

Alternatively, the message proxy unit in the proxy server 330 may send the cached message to the terminal device 310 by using the second information when the following plurality of conditions are met: the cached application message meets the caching duration, a data amount of the cached message exceeds the threshold of amount of cached data, and the quantity of cached messages exceeds the threshold of quantity of cached messages.

It should be noted that the foregoing trigger condition for the proxy server 330 to send the second information to the terminal device 310 is merely used as an example, and joint sending of the cached messages to the terminal device 310 may be triggered based on another basis or trigger condition. This is not specifically limited in this embodiment of this application, and may be determined based on a software/hardware capability of the device, a use scenario, and the like.

With reference to a specific use status of a terminal device, the following describes in detail a communication method of the terminal device in a different use status provided in an embodiment of this application.

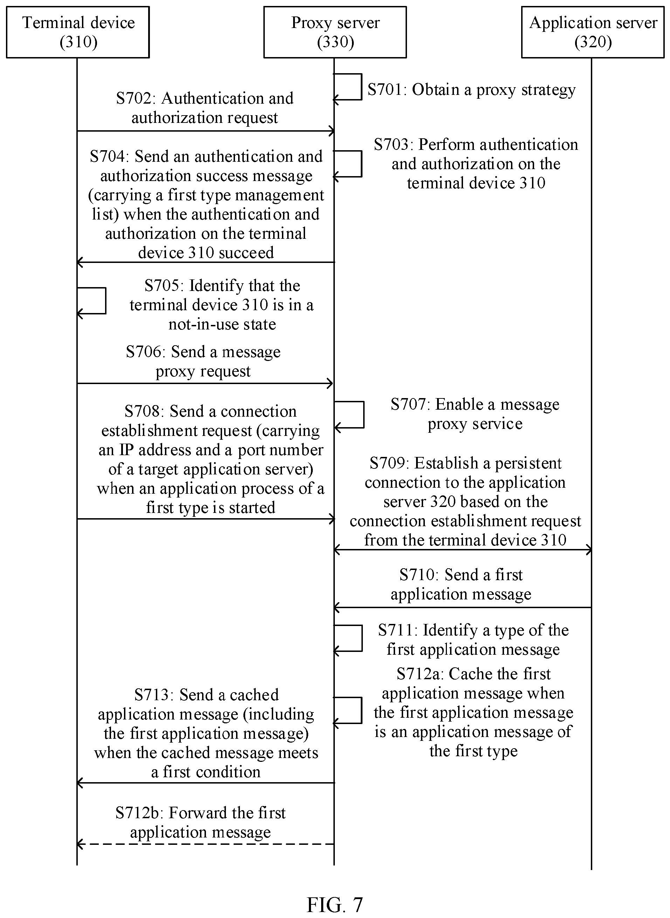

FIG. 7 is an interaction diagram of a communication method of a terminal device in a not-in-use state. As shown in FIG. 7, the communication method provided in this embodiment of this application may include S701 to S712a and S713, or include S701 to S712b.

S701: A proxy server 330 obtains a proxy strategy.

The proxy strategy may include but is not limited to a message identification strategy, a message forwarding strategy, a type management list, and the like.

The message identification strategy is used to identify a type of an application message, for example, identify whether the application message belongs to a first type or a second type. In an example, a form of the message identification strategy may be a message identification condition, a message identification model, or the like. This is not specifically limited in this embodiment of this application.

The message forwarding strategy is, for example, a first strategy or a second strategy. The first strategy is, for example, a caching strategy, and the second strategy is, for example, a real-time forwarding strategy. The caching strategy is used to specify a caching rule of an application message of the first type, for example, specified caching duration, a specified quantity of cached messages, and a specified amount of cached data. In some embodiments, the specified caching duration is, for example, 2 hours, the specified quantity of cached messages is, for example, 100, and the specified amount of cached data is, for example, 100 MB. In some embodiments, the caching strategy may be further refined to specify caching rules of the application message of the first type in different time periods. For example, in a period from 23:00 to 07:00, the specified caching duration is, for example, 2 hours, the specified quantity of cached messages is, for example, 100, and the specified amount of cached data is, for example, 100 MB; and in a period from 07:01 to 22:59, the specified caching duration is, for example, 10 minutes, the specified quantity of cached messages is, for example, 20, and the specified amount of cached data is, for example, 10 MB.

The type management list includes a first type management list and a second type management list. For example, the first type management list is a first list, the second type management list is a second list, the first list includes an application identifier corresponding to a message of the first type, and the second list includes an application identifier corresponding to a message of the second type. For another example, the first type management list includes one or more of the following information of the message of the first type: a bitstream feature, a packet feature code, a used protocol, and the like, and the second type management list includes one or more of the following information of the message of the second type: a bitstream feature, a packet feature code, a used protocol, and the like.

In some embodiments, the proxy strategy may be preconfigured by a developer in the proxy server 330.

In some embodiments, in a process in which the proxy server 330 provides a message proxy service, the proxy server 330 may accept a modification made by the developer to the proxy strategy.

In some embodiments, in the process in which the proxy server 330 provides the message proxy service, the proxy server 330 may further perform deep learning on a message proxy process of the proxy server 330, and automatically optimize the proxy strategy based on a learning result.

For example, a structure of the proxy server 330 is shown in FIG. 4 or FIG. 5. A strategy management unit in the proxy server 330 may be configured to maintain the proxy strategy.

S702: The proxy server 330 receives an authentication and authorization request of the terminal device 310.

S703: The proxy server 330 performs authentication and authorization on the terminal device 310.

That the proxy server 330 performs authentication and authorization on the terminal device 310 may include but is not limited to performing validity check and permission check on the terminal device 310. For example, the proxy server 330 may perform authentication and authorization on a certificate used by the terminal device 310. For a specific method and process for device authentication and authorization, refer to the technology. This is not limited in this embodiment of this application.

For example, the structure of the proxy server 330 is shown in FIG. 4 or FIG. 5. The strategy management unit in the proxy server 330 may receive the authentication and authorization request of the terminal device 310, and is responsible for performing authentication and authorization on the terminal device 310.

S704: The proxy server 330 sends an authentication and authorization success message to the terminal device 310 when the authentication and authorization on the terminal device 310 succeed, where the authentication and authorization success message carries the first type management list.

For example, the authentication and authorization success message carries the first list.

S705: The terminal device 310 identifies that the terminal device 310 is in the not-in-use state.

In an example, the terminal device 310 may sense a use status of the terminal device based on one or more of the following information: whether a screen is turned on, whether a user operation is received, whether the terminal device 310 is unlocked, whether a task is running in foreground, whether the terminal device 310 is being charged, and time information.

For example, when identifying that the terminal device 310 meets one or more of the following conditions, the terminal device 310 may consider that the terminal device 310 is in the not-in-use state: the screen is turned off, no user operation is received, the terminal device 310 is locked, no task is running in the foreground, the terminal device 310 is currently being charged, and time meets a first time period (for example, 23:00 to 07:00).

For example, a structure of the terminal device 310 is shown in FIG. 4 or FIG. 5. The terminal device 310 may sense the use status of the terminal device through a proxy management unit provided in a message proxy SDK.

A specific basis, method, and process for sensing the use status by the terminal device 310 are not specifically limited in this embodiment of this application, and may be determined based on a device capability, a configuration, a specific use scenario, and the like.

S706: The terminal device 310 sends a message proxy request to the proxy server 330.

The message proxy request is used to request the proxy server 330 to enable the message proxy service. In an example, the message proxy request is, for example, an enable control instruction.

For example, the structure of the terminal device 310 is shown in FIG. 4 or FIG. 5. The terminal device 310 may send the message proxy request to the strategy management unit in the proxy server 330 through the proxy management unit provided in the message proxy SDK.

S707: The proxy server 330 enables the message proxy service.

For example, the structure of the proxy server 330 is shown in FIG. 4 or FIG. 5. The strategy management unit in the proxy server 330 may receive the message proxy request of the terminal device 310, and is responsible for enabling the message proxy service.

S708: The terminal device 310 sends a connection establishment request to the proxy server 330 when an application process of the first type is started, where the connection establishment request carries an IP address and a port number of a target application server (for example, an application server 320 shown in FIG. 7).

In an example, the terminal device 310 may send, based on the first type management list received from the proxy server 330 in S704, the connection establishment request to the proxy server 330 when the application process of the first type is started.

For example, the first type management list is the first list. The terminal device 310 may send the connection establishment request to the proxy server 330 when an application process of an application in the first list is started.

In a possible implementation, the connection establishment request may carry a custom packet. The custom packet is constructed by the terminal device 310, and the custom packet includes an IP address and a port number of the proxy server 330. Based on this, the terminal device 310 may forward a socket of an application message push process to the proxy server 330 by using the custom packet. With reference to the IP address and the port number that are of the target application server and that are carried in the connection establishment request, the proxy server 330 may establish a persistent connection between the terminal device 310 and the application server 320 through the proxy server 330.

S709: The proxy server 330 establishes a persistent connection to the target application server (for example, the application server 320 shown in FIG. 7) based on the connection establishment request from the terminal device 310.

S710: The application server 320 sends a first application message to the proxy server 330.

The first application message may include but is not limited to the following messages: a system notification message, an advertisement message, an instant messaging message, a call request message, a software update package, and the like. Specific content, a form, an objective, and the like of the first application message are not specifically limited in this embodiment of this application.

For example, a structure of the application server 320 is shown in FIG. 4 or FIG. 5. The application server 320 may send the first application message to the proxy server 330 through a message sending/receiving unit.

S711: The proxy server 330 identifies a type of the first application message.

The type of the first application message may include but is not limited to the first type or the second type.

In an example, a first application message of the first type may specifically have one or more of the following features: a low real-time requirement (for example, a non-real-time message), high power consumption, low importance, and the like. A first application message of the second type may specifically have one or more of the following features: a high real-time requirement (for example, a real-time message), low power consumption, high importance, and the like.

For example, the proxy server 330 may analyze one or more pieces of information such as a bitstream feature, a packet feature code, and a used protocol of the first application message, to identify a real-time requirement of the first application message (for example, whether the first application message is a real-time message), so as to identify the type of the first application message.

For another example, the proxy server 330 may analyze a data amount and the like carried in the first application message, to identify a power consumption degree of the first application message, so as to identify the type of the first application message.

For another example, the proxy server 330 may analyze whether an application to which the first application message belongs is in the first list and/or in the second list, to identify the type of the first application message.

A basis, a specific method, and a process for identifying the type of the application message are not limited in this embodiment of this application, and may be determined based on a specific use scenario and a software/hardware capability of the device.

For example, the structure of the proxy server 330 is shown in FIG. 4 or FIG. 5. The proxy server 330 may identify the type of the first application message through a message proxy unit.

The proxy server 330 performs S712a and then performs S713 when identifying that the first application message is an application message of the first type; or the proxy server 330 performs S712b when identifying that the first application message is an application message of the second type.

S712a: The proxy server 330 caches the first application message.

For example, the structure of the proxy server 330 is shown in FIG. 4 or FIG. 5. The proxy server 330 may cache the received first application message through the message proxy unit.

S713: The proxy server 330 sends a cached application message to the terminal device 310 when the message cached by the proxy server 330 meets a first condition, where the cached application message includes the first application message.

That the first condition is met may include but is not limited to one or more of the following: a cached application message meets caching duration, the cached application message exceeds a threshold of amount of cached data, and the cached application message exceeds a threshold of quantity of cached messages.

For example, the proxy server 330 may send the cached message to the terminal device 310 by using second information when the cached application message meets the caching duration, that is, the proxy server 330 may send the cached message to the terminal device 310 by using the second information at an interval of the caching duration.

For another example, the proxy server 330 may send the cached message to the terminal device 310 when a data amount of the cached message exceeds the threshold of amount of cached data.

For another example, the proxy server 330 may send the cached message to the terminal device 310 when the quantity of cached messages exceeds the threshold of quantity of cached messages.

For example, the structure of the proxy server 330 is shown in FIG. 4 or FIG. 5. The proxy server 330 may send the cached application message to the terminal device 310 (for example, the message proxy SDK in the terminal device 310) through the message proxy unit. Correspondingly, after receiving the application message sent by the proxy server 330, the terminal device 310 may deliver the application message to a corresponding application for subsequent processing.

It should be noted that the foregoing trigger condition for the proxy server 330 to send the cached message to the terminal device 310 is merely used as an example, and joint sending of the cached messages to the terminal device 310 may be triggered based on another basis or trigger condition. This is not specifically limited in this embodiment of this application, and may be determined based on a software/hardware capability of the device, a use scenario, and the like.

S712b: The proxy server 330 forwards the first application message to the terminal device 310.

That is, the proxy server 330 forwards the first application message to the terminal device 310 in real time when identifying that the first application message is an application message of the second type. Correspondingly, after receiving the first application message sent by the proxy server 330, the terminal device 310 may deliver the first application message to a corresponding application for subsequent processing. In this way, it can be ensured that an application message that is important to a user can reach the terminal device in a timely manner, thereby ensuring user experience.

For example, the structure of the proxy server 330 is shown in FIG. 4 or FIG. 5. The proxy server 330 may forward the application message to the terminal device 310 through the message proxy unit.

It may be understood that in the solution provided in this embodiment of this application, the use status of the terminal device may be sensed on a terminal device side, and downlink sending of an application message is performed based on the sensed use status of the terminal device by using a strategy adapted to the sensed use status. For example, when it is identified that the terminal device is in the not-in-use state, the message proxy service is enabled. After enabling the message proxy service, the proxy server may send a downlink application message to the terminal device side by using a specific strategy (for example, the first strategy or the second strategy) based on a message type of the application message, for example, forward an application message of the second type in real time, or cache application messages of the first type and then jointly forward the application messages. Based on this, when the terminal device is in the not-in-use state, while it is ensured that an application message that is important to the user can reach the terminal device in a timely manner, unnecessary power consumption and disturbance caused to the terminal device by frequent wakeup of the terminal device due to an application message of low importance can be minimized, thereby improving user experience.

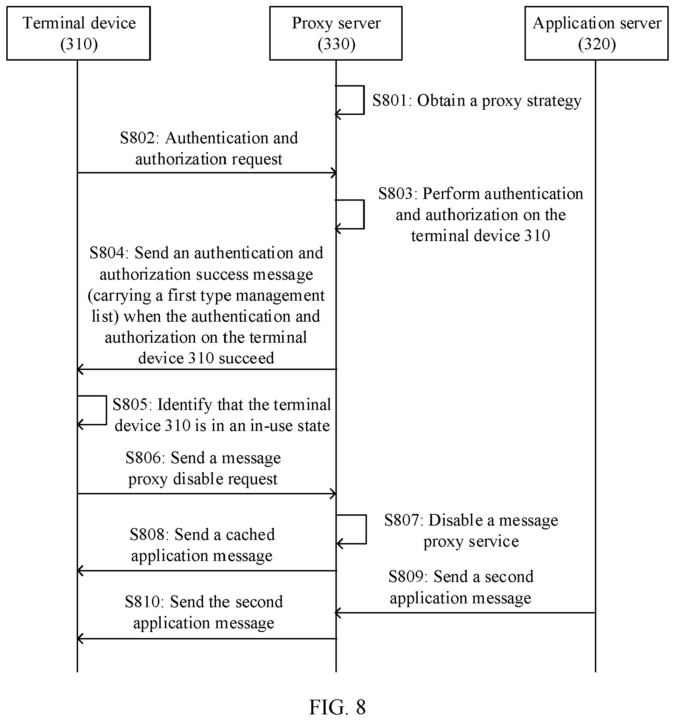

FIG. 8 is an interaction diagram of a communication method of a terminal device in an in-use state. As shown in FIG. 8, the communication method provided in this embodiment of this application may include S801 to S808.

S801: A proxy server 330 obtains a proxy strategy.

S802: The proxy server 330 receives an authentication and authorization request of the terminal device 310.

S803: The proxy server 330 performs authentication and authorization on the terminal device 310.

S804: The proxy server 330 sends an authentication and authorization success message to the terminal device 310 when the authentication and authorization on the terminal device 310 succeed, where the authentication and authorization success message carries a first type management list.

For detailed descriptions of S801 to S804, refer to the foregoing descriptions of S701 to S704. Details are not described herein again.

S805: The terminal device 310 identifies that the terminal device 310 is in the in-use state.

In an example, the terminal device 310 may sense a use status of the terminal device based on one or more of the following information: whether a screen is turned on, whether a user operation is received, whether the terminal device 310 is unlocked, whether a task is running in foreground, whether the terminal device 310 is being charged, and time information.

For example, when identifying that the terminal device 310 meets one or more of the following conditions, the terminal device 310 may consider that the terminal device 310 is in the in-use state: the screen is turned on, a user operation is received, the terminal device 310 is unlocked, a task is running in the foreground, the terminal device 310 is currently not charged, and time meets a second time period (for example, 11:45 to 13:30).

For example, a structure of the terminal device 310 is shown in FIG. 4 or FIG. 5. The terminal device 310 may sense the use status of the terminal device through a proxy management unit provided in a message proxy SDK.

A specific basis, method, and process for sensing the use status by the terminal device 310 are not specifically limited in this embodiment of this application, and may be determined based on a device capability, a configuration, a specific use scenario, and the like.

S806: The terminal device 310 sends a message proxy disable request to the proxy server 330.

The message proxy disable request is used to request the proxy server 330 to disable a message proxy service. For example, the terminal device 310 may send the message proxy disable request to the proxy server 330 by using third information or fourth information. In an example, the message proxy disable request is, for example, an unEnable control instruction.

For example, the structure of the terminal device 310 is shown in FIG. 4 or FIG. 5. The terminal device 310 may send the message proxy disable request to a strategy management unit in the proxy server 330 through the proxy management unit provided in the message proxy SDK.

S807: The proxy server 330 disables the message proxy service.

For example, the structure of the proxy server 330 is shown in FIG. 4 or FIG. 5. The strategy management unit in the proxy server 330 may receive the message proxy disable request of the terminal device 310, and is responsible for disabling the message proxy service.

S808: The proxy server 330 sends a cached application message to the terminal device 310.

For example, the structure of the proxy server 330 is shown in FIG. 4 or FIG. 5. The proxy server 330 may query the cached application message through a message proxy unit, and then send cached application messages to the terminal device 310 (for example, the message proxy SDK in the terminal device 310) in batches based on a persistent connection established with the terminal device 310. Correspondingly, after receiving the application message sent by the proxy server 330, the terminal device 310 may deliver the application message to a corresponding application for subsequent processing.

In some embodiments, as shown in FIG. 8, when an application server 320 has a to-be-sent application message for the terminal device 310, the communication method further includes the following steps.

S809: The application server 320 sends a second application message to the proxy server 330.

The second application message may include but is not limited to the following messages: a system notification message, an advertisement message, an instant messaging message, a call request message, a software update package, and the like. Specific content, a form, an objective, and the like of the second application message are not specifically limited in this embodiment of this application.

For example, a structure of the application server 320 is shown in FIG. 4 or FIG. 5. The application server 320 may send the second application message to the proxy server 330 through a message sending/receiving unit.

S810: The proxy server 330 forwards the second application message to the terminal device 310.

That is, the proxy server 330 forwards the second application message to the terminal device 310 in real time. Correspondingly, after receiving the second application message sent by the proxy server 330, the terminal device 310 may deliver the second application message to a corresponding application for subsequent processing. In this way, normal user experience can be ensured when a user uses the terminal device 310.

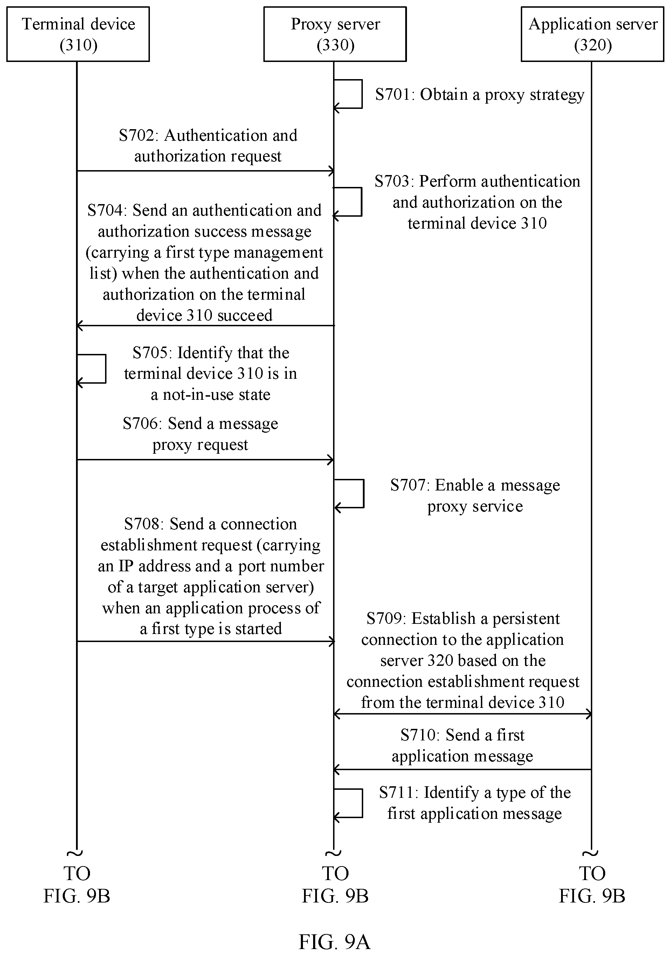

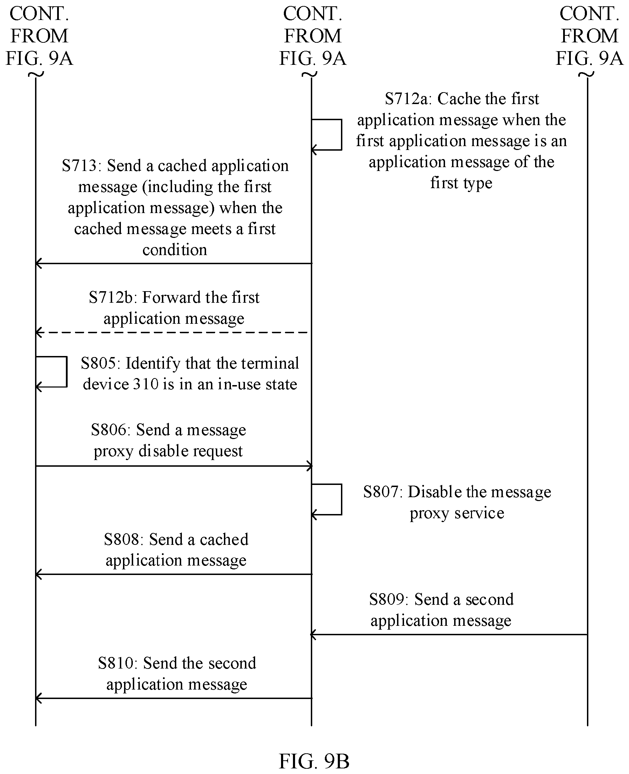

It should be noted that in FIG. 7 and FIG. 8 in this application, only the terminal device in the not-in-use state and the terminal device in the in-use state are respectively used as examples to describe the communication method for transmitting an application message provided in embodiments of this application. It may be understood that in some embodiments, the communication method shown in FIG. 8 may be further combined with the communication method shown in FIG. 7. As shown in FIG. 9A and FIG. 9B, after S701 to S712a and S713 shown in FIG. 7 are performed, or S701 to S712b shown in FIG. 7 are performed, when it is identified that the terminal device 310 is in the in-use state (that is, S805 shown in FIG. 9B), the terminal device 310 may further perform S806 shown in FIG. 9B. Then, the proxy server 330 performs S807, S808, S809, and S810 shown in FIG. 9B.

It may be understood that in the solution provided in this embodiment of this application, the use status of the terminal device may be sensed on a terminal device side, and downlink sending of an application message is performed based on the sensed use status of the terminal device by using a strategy adapted to the sensed use status. For example, when it is identified that the terminal device is in the in-use state, the message proxy service is disabled. After disabling the message proxy service, the proxy server may send previously cached application messages of a first type to the terminal device side in batches. Based on this, when the terminal device enters the in-use state, it can be ensured that an application message can reach the terminal device in a timely manner, thereby improving user experience.

It should be understood that the solutions in embodiments of this application may be properly combined for use, and explanations or descriptions of terms in embodiments may be mutually referenced or explained in embodiments. This is not limited.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be understood that to implement functions in any one of the foregoing embodiments, the device (for example, the terminal device or the proxy server) includes corresponding hardware structures and/or software modules for performing the functions. It should be readily appreciated by a person skilled in the art that the example units and algorithm steps described with reference to embodiments disclosed in this specification can be implemented in this application by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device (for example, the terminal device or the proxy server) may be divided into functional modules. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, is merely logical function division, and may be other division in actual implementation.

It should be further understood that the modules in the device (for example, the terminal device or the proxy server) may be implemented in a form of software and/or hardware. This is not specifically limited herein. In other words, the device (for example, the terminal device or the proxy server) is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used to implement data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, or microwave). The computer-readable storage medium may be any usable medium that can be accessed by the computer, or a data storage device, for example, a server or a data center, into which one or more usable media are integrated. The usable medium may be a magnetic medium (for example, a floppy disk, a hard disk, or a magnetic tape), an optical medium (for example, a digital video disc (digital video disc, DVD)), a semiconductor medium (for example, a solid state disk solid state disk (SSD)), or the like.

Method or algorithm steps described with reference to embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable read-only memory (electrically erasable programmable read-only memory, EEPROM), a register, a hard disk, a removable hard disk, a compact disc read-only memory (compact disc read-only memory, CD-ROM), or any other form of storage medium well known in the art. For example, the storage medium is coupled to the processor, so that the processor can read information from the storage medium and write information into the storage medium. Certainly, the storage medium may be a component of the processor. The processor and the storage medium may be located in an application-specific integrated circuit (application-specific integrated circuit, ASIC). In addition, the ASIC may be located in the device (for example, the terminal device or the proxy server). Certainly, the processor and the storage medium may exist as discrete components.

Based on the foregoing descriptions of the implementations, a person skilled in the art may clearly understand that for the purpose of convenient and brief descriptions, division into the foregoing functional modules is merely used as an example for description. During actual application, the foregoing functions may be allocated to and completed by different functional modules based on a requirement, that is, an inner structure of an apparatus is divided into different functional modules to implement all or some of the functions described above.

## Claims

1. A communication method, wherein the method is applied to a proxy server, and the method comprises:
receiving first information from a terminal device, wherein the first information indicates the proxy server to enable a message proxy service;
receiving a first application message from an application server, and obtaining a type of the first application message; and
caching the first application message when the first application message is of a first type, and sending the first application message to the terminal device when a first condition is met; or
forwarding the first application message to the terminal device when the first application message is of a second type.

2. The method according to claim 1, wherein obtaining the type of the first application message comprises:
analyzing one or more of the following features of the first application message to obtain the type of the first application message: an application identifier of an application to which the first application message belongs, a bitstream feature, a packet feature code, a used protocol, and a data amount.

3. The method according to claim 1 or 2, wherein that the first condition is met comprises one or more of the following: a cached message meets caching duration, a cached message exceeds a threshold of amount of cached data, and cached messages exceed a threshold of quantity of cached messages.

4. The method according to any one of claims 1 to 3, wherein before sending the first application message to the terminal device, the method further comprises:
receiving another application message of the first type from the application server.

5. The method according to claim 4, wherein
the proxy server sends the first application message to the terminal device by using second information, and the second information further comprises the another application message of the first type.

6. The method according to any one of claims 1 to 5, wherein the method further comprises:
sending the second information to the terminal device when receiving third information from the terminal device, wherein
the third information indicates the proxy server to disable the message proxy service, and the second information comprises the first application message.

7. The method according to any one of claims 1 to 6, wherein
the first information is sent to the proxy server when the terminal device is in a not-in-use state.

8. The method according to any one of claims 1 to 7, wherein the method further comprises:
receiving fourth information from the terminal device, wherein the fourth information indicates the proxy server to disable the message proxy service; and
receiving a second application message from the application server, and forwarding the second application message to the terminal device.

9. The method according to claim 8, wherein
the fourth information is sent to the proxy server when the terminal device is in an in-use state.

10. The method according to any one of claims 1 to 9, wherein the proxy server sends an application message to the terminal device by using a heartbeat message.

11. A communication method, wherein the method is applied to a terminal device, and the method comprises:
sending first information to a proxy server when the terminal device is in a not-in-use state, wherein the first information indicates the proxy server to enable a message proxy service; or
sending fourth information to the proxy server when the terminal device is in an in-use state, wherein the fourth information indicates the proxy server to disable the message proxy service.

12. The method according to claim 11, wherein the terminal device is in the not-in-use state, and the method further comprises:
receiving second information from the proxy server, wherein the second information comprises a plurality of application messages.

13. The method according to claim 11, wherein the terminal device is in the in-use state, and the method further comprises:
receiving an application message that is from an application server and that is forwarded by the proxy server in real time.

14. The method according to any one of claims 11 to 13, wherein the method further comprises:
obtaining a use status of the terminal device based on one or more of the following information: whether a screen is turned on, whether a user operation is received, whether the terminal device is unlocked, whether a task is running in foreground, whether the terminal device is being charged, and time information.

15. A proxy server, wherein the proxy server comprises:
a transceiver, configured to send and receive a radio signal;
a memory, configured to store computer program instructions; and
a processor, configured to execute the computer program instructions to support the proxy server in implementing the method according to any one of claims 1 to 10.

16. A terminal device, wherein the terminal device comprises:
a transceiver, configured to send and receive a radio signal;
a memory, configured to store computer program instructions; and
a processor, configured to execute the computer program instructions to support the proxy server in implementing the method according to any one of claims 11 to 14.

17. A communication system, wherein the communication system comprises:
an application server;
the proxy server according to claim 15; and
the terminal device according to claim 16.

18. A computer-readable storage medium, wherein the computer-readable storage medium stores computer program instructions, and when the computer program instructions are executed by a processing circuit, the method according to any one of claims 1 to 14 is implemented.

19. A computer program product comprising instructions, wherein when the computer program product is run on a computer, the computer is enabled to perform the method according to any one of claims 1 to 14.

20. A chip system, wherein the chip system comprises a processing circuit and a storage medium, the storage medium stores computer program instructions, and when the computer program instructions are executed by the processing circuit, the method according to any one of claims 1 to 14 is implemented.
